(19) Europäisches Patentamt / European Patent Office / Office européen des brevets

(11) **EP 0 821 660 B2**

(12) **NEUE EUROPÄISCHE PATENTSCHRIFT**
Nach dem Einspruchsverfahrens

(45) Veröffentlichungstag und Bekanntmachung des Hinweises auf die Entscheidung über den Einspruch:
**13.08.2008 Patentblatt 2008/33**

(45) Hinweis auf die Patenterteilung:
**24.11.2004 Patentblatt 2004/48**

(21) Anmeldenummer: **96910954.5**

(22) Anmeldetag: **04.04.1996**

(51) Int Cl.:
***C04B 41/48*** $^{(2006.01)}$ ***C08F 220/06*** $^{(2006.01)}$
***C08F 220/54*** $^{(2006.01)}$ ***C08F 246/00*** $^{(2006.01)}$

(86) Internationale Anmeldenummer:
**PCT/EP1996/001481**

(87) Internationale Veröffentlichungsnummer:
**WO 1996/033143 (24.10.1996 Gazette 1996/47)**

(54) **VERFAHREN ZUR KONSERVIERUNG EINES MINERALISCHEN FORMKÖRPERS**

PROCESS FOR PRESERVING A MINERAL MOULDING

PROCEDE DE CONSERVATION D'UN CORPS MOULE MINERAL

(84) Benannte Vertragsstaaten:
**AT BE CH DE DK FI FR GB IT LI NL SE**
Benannte Erstreckungsstaaten:
**SI**

(30) Priorität: **15.04.1995 DE 19514266**

(43) Veröffentlichungstag der Anmeldung:
**04.02.1998 Patentblatt 1998/06**

(73) Patentinhaber: **BASF SE**
**67056 Ludwigshafen (DE)**

(72) Erfinder:
- **RECK, Bernd**
  **D-67269 Grünstadt (DE)**
- **FRANZMANN, Gernot**
  **D-67273 Bobenheim (DE)**
- **BECHERT, Bertold**
  **D-67269 Grünstadt (DE)**
- **BÄCHER, Reinhard**
  **D-67098 Bad Dürkheim (DE)**
- **REHMER, Gerd**
  **D-67259 Beindersheim (DE)**

(56) Entgegenhaltungen:
**EP-A- 0 048 320** **EP-A- 0 095 695**
**EP-A- 0 368 226** **EP-A- 0 565 987**
**DE-A- 1 932 395** **DE-A- 2 250 517**
**DE-A- 2 524 064** **DE-A- 4 021 502**
**FR-A- 1 536 863**

- **DATABASE WPI Section Ch, Week 8712 Derwent Publications Ltd., London, GB; Class A82, AN 87-083489 XP002008272 & JP,A,62 034 947 (SANYO CHEM IND LTD) , 14.Februar 1987**

Bemerkungen:
Die Akte enthält technische Angaben, die nach dem Eingang der Anmeldung eingereicht wurden und die nicht in dieser Patentschrift enthalten sind.

EP 0 821 660 B2

## Beschreibung

Vorliegende Erfindung betrifft ein Verfahren zur Konservierung einer Betonröhre oder eines Betondachsteins durch Beschichten der Oberfläche mit einer wäßrigen Zusammensetzung, die eine wäßrige Polymerisatdispersion enthält, deren in disperser Verteilung befindliches Polymerisat P wenigstens eine ethylenisch ungesättigte Säure und/oder deren konjugierte Base in radikalisch polymerisierter Form einpolymerisiert enthält.

Ferner betrifft die vorliegende Erfindung die zum erfindungsgemäßen Konservieren erforderliche wäßrige Polymerisatdispersion selbst.

Die erfindungsgemäßen Betonröhren oder Betondachsteine entstehen aus einem Gemisch (einem Mörtel) aus einem mineralischen Bindemittel, Wasser, Zuschlägen sowie gegebenenfalls Hilfsmitteln nach Formgebung dadurch, daß das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton und/oder Zement, die durch anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Mineralfasern), in Sonderfällen auch aus Metallen oder organischen Zuschlägen oder aus Gemischen der genannten Zuschläge, mit Korngrößen oder Faserlängen die dem jeweiligen Verwendungszweck in an sich bekannter Weise angefaßt sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 43 40 510, der GB-PS 15 05 558, der US-A 31 96 122, der US-A 30 43 790, der US-A 32 39 479, der DE-A 43 17 035, der DE-A 43 17 036, der JP-A 91/131 533 und anderen Schriften bekannt sind.

Beispiele für die erfindungsgemäß zu konservierenden Betonröhren, wie sie zum Transport von Abwasser angewendet werden oder Betondachsteine sind z.B. in JP-A 55/44273, DE-A 2164256 oder in DE-A 3901073 beschrieben.

Nachteilig an Betonröhren oder Betondachsteinen ist, daß unter dem Einfluß der Witterung (insbesondere der Einwirkung von Wasser) die kationischen Bestandteile wie $Ca^{2+}$ im Lauf der Zeit herausgelöst werden, was ihre Festigkeit mindert. Eine weitere nachteilige Eigenschaft von Betonröhren oder Betondachsteinen ist das Auftreten von Ausblüherscheinungen. Diese sind vermutlich darauf zurückzuführen, daß die mineralischen Bindemittel mehrwertige Kationen wie $Ca^{2+}$ in alkalischer Umgebung enthalten. Durch Reaktion mit dem Kohlendioxid aus der Luft können sich so an der Oberfläche der mineralischen Formkörper in Wasser schwerlösliche unansehliche weiße Kalkflecken ausbilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Bereits sehr früh wurde versucht, den vorgenannten nachteiligen Eigenschaften dadurch entgegenzutreten, daß man Betonröhren oder Betondachsteine an ihrer Oberfläche durch das Aufbringen einer geeigneten Beschichtung versiegelt.

Zunächst wurde versucht, sie durch Lackieren mit Lacken auf der Basis von Vinylchlorid-Mischpolymerisaten in organischen Lösungsmitteln zu konservieren.

Nachteilig an dieser Verfahrensweise ist, daß sie nur bei trockenen Betondachsteinen oder -röhren angewendet werden kann, da auf noch feuchten Körpern die Haftung des Lackes schlecht ist und zudem poröse Filme entstehen.

Relativ rasch wurden die vorgenannten Nachteile der organischen Lacke dadurch überwunden, daß man die erfindungsgemäßen Formkörper an ihrer Oberfläche durch Beschichten mit wäßrigen Zusammensetzungen versiegelte, die eine wäßrige Polymerisatdispersion als Filmbildner enthielten.

Als zu verwendende Dispersionspolymerisate wurden dabei Styrol-Acrylester-Copolymerisate, Styrol-Butadien-Copolymerisate, Homo- und insbesondere Copolymere oder Terpolymere des Vinylacetats mit Olefinen, Vinylhalogeniden und/oder (Meth)acrylestern, Homo- oder Copolymere des Vinylpropionats, (Meth)acrylsäureester-Homo- oder Copolymerisate etc. (vgl. z.B. DE-A 21 64 256, Seite 4) empfohlen.

Die resultierenden Beschichtungen vermochten jedoch den Durchtritt der kationischen Bestandteile nicht in befriedigender Weise zu verhindern. Die Schweizer Patentschrift 446 720 empfiehlt als Abhilfe den wäßrigen Polymerisatdispersionen wasserlösliche Salze oder Säuren zuzugeben, die mit den Kationen der mineralischen Bindemittel schwer lösliche Salze bilden. Die Wirkung dieser Zusätze ist jedoch beschränkt, da sie z.B. durch Regen aus den Verfilmungen der wäßrigen Polymerisatdispersionen als Funktion der Zeit ausgewaschen werden und somit nur ein kurzzeitiger Schutz gegeben ist.

Die DE-A 39 01 073 und die DE-A 38 27 975 empfehlen zur Konservierung mineralischer Formkörper das Beschichten der entsprechenden Oberflächen mit einer wäßrigen Zusammensetzung, die als Bindemittel eine wäßrige Polymerisatdispersion enthält, deren dispergiertes Polymerisat 0,5 bis 5 Gew.-% wenigstens eines der Monomere Acrylsäure, Methacrylsäure, Vinylsulfonsäure, Itaconsäure, Crotonsäure, Maleinsäure und Fumarsäure in radikalisch copolymerisierter Form enthält.

Nachteilig an diesen Beschichtungen mineralischer Formkörper ist, daß auch ihre konservierende Wirkung nicht im vollen Umfang zu befriedigen vermag.

Aufgabe der vorliegenden Erfindung war es daher, ein verbessertes Verfahren zur Konservierung von Betonröhren oder Betondachsteinen zur Verfügung zu stellen, das die Nachteile der Verfahren des Standes der Technik nicht aufweist.

Demgemäß wurde ein Verfahren zur Konservierung einer Betonröhre oder eines Betondachsteins durch Beschichten der Oberfläche des mineralischen Formkörpers mit einer wäßrigen Zusammensetzung, bestehend aus einer wäßrigen Polymerisatdispersion, deren Verfilmung eine statische Glasübergangstemperatur von >20°C bis +50°C aufweist, bestehend aus einem in disperser Verteilung befindlichem Polymerisat P, dadurch gekennzeichnet, dass die wäßrige Polymerisatdispersion des Polymerisats P eine solche ist, die nach der Methode der radikalischen wäßrigen Emulsionspolymerisation erhältlich ist, wobei man

a) 10 bis 50 Gew.-% des insgesamt zu verwendenden Wassers, 0 bis 50 Gew.% dies insgesamt zu verwendenden Dispergiermittels und wenigstens einen Teil der Gesamtmenge der zupolymerisierenden Monomeren der allgemeinen Formel I in ein Polymerisationsgefäß vorlegt und auf die Polymerisationstemperatur erwärmt,

b) aus der Restmenge der Gesamtmenge der zu polymerisierenden Monomeren der allgemeinen Formel I, der Gesamtmenge der sonstigen zu polymerisierenden Monomeren, der Restmenge des Dispergiermittels und 10 bis 50 Gew.-% des insgesamt zu verwendenden Wassers eine Monomerenemulsion erzeugt, die
einen Zulauf 1 bildet,

c) die Gesamtmenge des zu verwendenden Polymerisationsinitiators in 1 bis 20 Gew.-% des insgesamt zu verwendenden Wassers löst und so einen Zulauf 2 erzeugt,

d) der auf die Polymerisationstemperatur erwärmten Vorlage 1 bis 10 Gew.-% des Zulauf 1 und 1 bis 10 Gew.-% des Zulauf 2 zufügt und das dabei resultierende Gemisch bis zu einem Umsatz der enthaltenen Monomeren von wenigstens 80 mol-% polymerisiert und

e) anschließend die Restmenge der Zuläufe 1 und 2 unter Aufrechterhaltung der Polymerisation räumlich getrennt dem Polymerisationsgefäß kontinuierlich zuführt, und

dadurch gekennzeichnet, dass das Polymerisat P in radikalisch polymerisierter Form einpolymerisiert enthält

| | |
|---|---|
| 90 bis 99,5 Gew.-% | wenigstens eines Monomeren aus der Gruppe umfassend Ester der Acrylsäure mit 1 bis 8 C-Atome aufweisenden Alkanolen, Ester der Methacrylsäure mit 1 bis 8 C-Atome aufweisenden Alkanolen, Styrol, α-Methylstyrol, o-Chlorstyrol und Vinyltoluole, |
| 0,5 bis 5 Gew.-% | wenigstens eines Monomeren der allgemeinen Formel I und |
| 0 bis 5 Gew.-% | eines oder mehrere Monomere aus der Gruppe umfassend Acrylsäure, Methacrylsäure, Itaconsäure, die Alkalimetallsalze dieser Säuren, die Ammoniumsalze dieser Säuren, Acrylamid und Methacrylamid, und |

wenigstens einen aus der Gruppe der Schutzkolloide, Emulgatoren, Polymerisationsinitiatoren, Molekulargewichtsreglern, aromatische Ketone, Titandioxid, Eisonoxide, Netzmittel, Fungizide, Entschäumer, Verdickungsmittel, ausgewählten zusatzstoffe.
Under dem Monomeren der allgemeinen Formel I versteht man

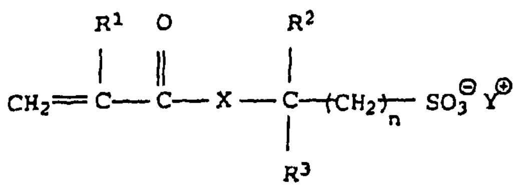 (I),

in der die Variablen folgende Bedeutung haben:

n = 0 bis 2,
$R^1$,$R^2$,$R^3$ = unabhängig voneinander Wasserstoff oder die Methylgruppe,
X = Sauerstoff oder die Iminogruppe (NH) und
Y = Wasserstoff, Alkalimetall oder Ammonium.

Wäßrige Polymerisatdispersionen, deren in disperser Verteilung befindliches Polymerisat wenigstens ein Monomeres der allgemeinen Formel I in radikalisch polymerisierter Form einpolymerisiert enthält, sind bekannt und z.B. in der DE-A 25 24 064 vorbeschrieben, wo ihre Verfilmungen als Haftkleber empfohlen werden. Die EP-B 95 695 empfiehlt die Verwendung von wenigstens ein Monomeres der allgemeinen Formel I in radikalisch polymerisierter Form einpolymerisiert enthaltenden wäßrigen Polymerisatdispersionen zur Modifikation von hydraulisch abbindenden Massen. Desgleichen gilt für die EP-A 368 226. Die DE-AS 19 32 395 empfiehlt wäßrige Polymerisatdispersionen von Monomere der allgemeinen Formel I in radikalisch polymerisierter Form einpolymerisiert enthaltenden wäßrigen Polymerisatdispersionen zum Überziehen von von mineralischen Formkörpern verschiedenen Substraten.

Erfindungsgemäß günstige Monomere der allgemeinen Formel I sind:

a) 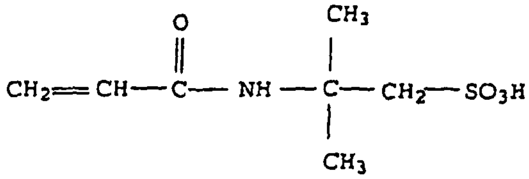 oder dessen Alkalimetall- oder Ammoniumsalz,

(2-Acrylamido-2-methyl-propansulfonsäure)

b) 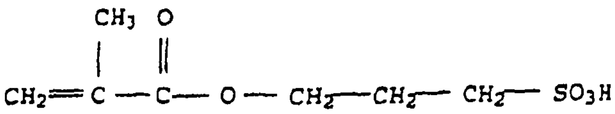 oder dessen Alkalimetall- oder Ammoniumsalz,

(Methacrylsäure(3-sulfopropyl)ester)

c) 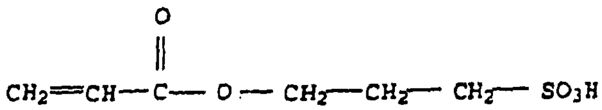 oder dessen Alkalimetall- oder Ammoniumsalz,

(Acrylsäure(3-sulfopropyl)ester)

d) 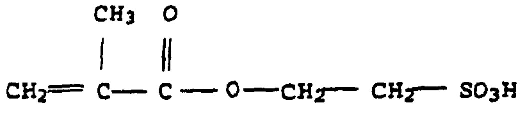 oder dessen Alkalimetall- oder Ammoniumsalz,

(Methacrylsäure(2-sulfoethyl)ester).

Unter den Alkalimetallsalzen der Monomeren der allgemeinen Formel I eignen sich insbesondere die Natrium- und Kaliummetallsalze.

Mit Vorteil enthält das in disperser Verteilung befindliche Polymerisat P der erfindungsgemäß zu verwendenden wäßrigen Polymerisatdispersion, bezogen auf sein Gewicht, 0,5 bis 5, vorzugsweise 0,5 bis 2, besonders bevorzugt 0,5

bis 1,5 und ganz besonders bevorzugt 0,5 bis 1 Gew.-% wenigstens eines Monomeren der allgemeinen Formel I in radikalisch polymerisierter Form einpolymerisiert.

Zweckmäßigerweise erfolgte die Herstellung des erfindungsgemäßen Polymerisats P nach der Methode der radikalischen Polymerisation, wobei als Comonomere des wenigstens einen Monomeren der allgemeinen Formel I von diesem verschiedene, wenigstens eine ethylenisch ungesättigte Gruppe aufweisende, Monomere in Betracht kommen. Als solche eignen sich z.B. Olefine wie Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat, Vinylpivalat und Vinylstearat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl-, n-butyl-, -iso-butyl-, -tert.-butyl- und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren. Die genannten Monomeren bilden in der Regel die Hauptmonomeren, die, bezogen auf die Gesamtmenge der zu polymerisierenden Monomeren, normalerweise einen Anteil von wenigstens 90 Gew.-% auf sich vereinen. In aller Regel weisen diese Monomeren in Wasser bei Normalbedingungen (25°C, 1atm) lediglich eine geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze wie N-Vinylpyrrolidon. Selbstverständlich kommen auch die Alkalimetallsalze oder das Ammoniumsalz der vorgenannten Säuren als mögliche Monomere in Betracht, insbesondere ihre Natriummetall- und Kaliummetallsalze. Diese Monomeren, die eine erhöhte Wasserlöslichkeit aufweisen, werden im Normalfall in das Polymerisat P lediglich in solchen Mengen einpolymerisiert, daß ihre Menge zusammen mit der Menge der einzupolymerisierenden Monomeren der allgemeinen Formel I, bezogen auf die Gesamtmenge der zu polymerisierenden Monomeren, 10 Gew.-%, vorzugsweise 5 Gew.-%, nicht übersteigt. Höhere Gehalte dieser Monomeren mindern in der Regel die Wasserfestigkeit der erfindungsgemäßen konservierenden Beschichtung.

Monomere, die üblicherweise die innere Festigkeit von Verfilmungen wäßriger Polymerisatdispersionen erhöhen, weisen normalerweise wenigstens eine Epoxy-, Hydroxy-, N-Methylol-, Carbonyloder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkanolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acrylund Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate wie Ethylenglykoldiacrylat, 1,3-Butylenglykoldiacrylat, 1,4-Butylenglykoldiacrylat sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure- $C_{1-8}$-Hydroxyalkylester wie n-Hydroxyethyl-, n-Hydroxypropyl- oder n-Hydroxybutylacrylat und -methacrylat sowie Verbindungen wie Diacetonacrylamid und Acethylacetoxyethylacrylat bzw. -methacrylat, Ureidoethylmethacrylat und Acrylamidoglykolsäure. Gegebenenfalls können auch ethylenisch ungesättigte Monomere copolymerisiert werden, die Abkömmlinge des Benzophenons oder Acetophenons sind und unter Einwirkung von elektromagnetischer Strahlung die innere Festigkeit von Verfilmungen wäßriger Polymerisatdispersionen erhöhen. Bezogen auf die Gesamtmenge der zu polymerisierenden Monomeren werden die vorgenannten, die innere Festigkeit erhöhenden, Monomeren meist in einer Menge von bis zu 10 Gew.-%, vorzugsweise bis zu 5 Gew.-%, mit einpolymerisiert.

Die Verfilmungen der dabei resultierenden wäßrigen Polymerisatdispersionen weisen in der Regel eine reduzierte Verschmutzungsneigung auf.

Als weitere Wirkmonomere können beispielsweise, bezogen auf die Gesamtmenge der zu polymerisierenden Monomeren, bis zu 5 Gew.-%, vorzugsweise bis zu 2 Gew.-%, ethylenisch ungesättigte Organozinnverbindungen copolymerisiert werden, wie sie in der DE-A 39 01 073 beschrieben sind. Die dabei resultierenden Verfilmungen sind biocid ausgerüstet und zeigen z.B. einen verminderten Bewuchs durch Algen.

Günstige Monomerenzusammensetzungen zur Herstellung von erfindungsgemäßen Polymerisaten P umfassen neben 0,5 bis 5 Gew.-% an Monomeren der allgemeinen Formel I im allgemeinen

- 70 bis 99,5 Gew.-% Ester der Acryl- und/oder Methacrylsäure mit 1 bis 12 C-Atome aufweisenden Alkanolen und/oder Styrol
oder
- 70 bis 99,5 Gew.-% Styrol und/oder Butadien.

Besonders relevant sind im Hinblick auf die erfindungsgemäßen Polymerisate P Monomerenzusammensetzungen, die umfassen:

| | |
|---|---|
| 90 bis 99,5 Gew.-% | an Estern der Acryl- und/oder Methacrylsäure mit 1 bis 12 C-Atome aufweisenden Alkanolen und/oder Styrol, |
| 0,5 bis 5 Gew.-% | wenigstens eines Monomeren der allgemeinen Formel I und |
| 0 bis 5 Gew.-% | eines oder mehrere Monomere aus der Gruppe umfassend 3 bis 6 C-Atome aufweisende α, β-mono-ethylenisch ungesättigte Carbonsäuren, deren Alkalimetallsalze, deren Ammoniumsalz und deren Amid; |

oder

| | |
|---|---|
| 90 bis 99,5 Gew.-% | Styrol und/oder Butadien, |
| 0,5 bis 5 Gew.-% | wenigstens eines Monomeren der allgemeinen Formel I und |
| 0 bis 5 Gew.-% | eines oder mehrere Monomere aus der Gruppe umfassend 3 bis 6 C-Atome aufweisende α, β-mono-ethylenisch ungesättigte Carbonsäuren, deren Alkalimetallsalze, deren Ammoniumsalz und deren Amid; |

Als weitere günstige Monomerenzusammensetzung kommt für das Polymerisat P eine Monomerenzusammensetzung in Betracht, die umfaßt

| | |
|---|---|
| 90 bis 99,5 Gew.-% | wenigstens eines Monomeren aus der Gruppe umfassend Ester der Acrylsäure mit 1 bis 8 C-Atome aufweisenden Alkanolen, Ester der Methacrylsäure mit 1 bis 8 C-Atome aufweisenden Alkanolen, Styrol, α-Methylstyrol, o-Chlorstyrol und Vinyltoluole, |
| 0,5 bis 5 Gew.-% | wenigstens eines Monomere der allgemeinen Formel I und |
| 0 bis 5 Gew. -% | eines oder mehrere Monomere aus der Gruppe umfassend Acrylsäure, Methacrylsäure, Itaconsäure, die Alkalimetallsalze dieser Säuren, die Ammoniumsalze dieser Säuren, Acrylamid und Methacrylamid. |

Unter diesen Monomerenzusammensetzungen sind diejenigen bevorzugt, die keine vinylaromatischen Monomeren umfassen.

Ferner umfassen die vorgenannten Monomerenzusammensetzungen allesamt mit Vorteil 0,5 bis 2, besser 0,5 bis 1,5 und besonders vorteilhaft 0,5 bis 1 Gew.-% an Monomeren der allgemeinen Formel I, unter denen bevorzugt die 2-Acrylamido-2-methyl-propansulfonsäure, deren Alkalimetall- und/oder deren Ammoniumsalz angewendet wird.

Gemäß Ullmanns Encyclopädie der technischen Chemie, Bd. 19, 4. Auflage, Verlag Chemie, Weinheim (1980) S. 17/18, erfolgt aus einer wäßrigen Polymerisatdispersion nur dann eine anwendungsgerechte Bildung eines Polymerfilms, wenn die sogenannte Mindestfilmbildetemperatur der wäßrigen Polymerisatdispersion unterhalb der Anwendungstemperatur liegt. Die Mindestfilmbildetemperatur einer wäßrigen Polymerisatdispersion läßt sich in dem Fachmann an sich bekannter Weise z.B. dadurch beeinflussen, daß man der wäßrigen Polymerisatdispersion sogenannte schwerflüchtige äußere Weichmacher wie z.B. Ester der Phthalsäure und/oder leichtflüchtige Filmbildehilfsmittel wie niedrig siedende organische Lösungsmittel zusetzt, wobei sich eine Kombination aus bei 25°C in Wasser wenig löslichen äußeren Weichmachern und bei 25°C in Wasser gut löslichen Filmbildehilfsmitteln für die Filmbildung als besonders vorteilhaft erweist. Als relativ leichtflüchtige Filmbildehilfsmittel kommen u.a. in Betracht: Ethylenglykol, 1,2-Propandiol, Glycerin und andere aliphatische Polyalkohole, Ethylenglykolmonoethylether, Ethylenglykolmonobutylether, Ethylenglykolhexylether, Diethylenglykolmonomethylether, Diethylenglykolmonopropylether, Diethylenglykolmonobutylether, Dipropylenglykolmethylether, Dipropylenglykol-n-butylether, Propylenglykolt-butylether, Tripropylenglykolmethylether und andere aliphatische Glykolether, Ethylenglykolmonoethyletheracetat, Diethylenglykolmonobutyletheracetat, Propylenglykolmonomethyletheracetat und andere Ester von aliphatischen Glykolethern, Adipinsäurediisobutylester, Bernsteinsäurediisobutylester, Glutarsäurediisobutylester, Maleinsäurediisobutylester und andere Diester aliphatischer Dicarbonsäuren und Testbenzin.

Als schwer flüchtige äußere Weichmacher kommen u.a. in Betracht: Dimethylphthalat, Dibutylphthalat, Dioctylphthalat und andere Ester der Phthalsäure, 2,2,2-Trimethyl-1,3-pentandiolmonoisobutyrat,propoxyliertes m-Kresol mit einem zahlenmittleren Propoxylierungsgrad von 6, propoxyliertes p-Kresol mit einem zahlenmittleren Propoxylierungsgrad von 6 sowie Gemische dieser beiden Oligo(propylenglykol)-Kresolether, Oligo(propylenglykol)-Kresolether mit einem zahlenmittleren Propoxylierungsgrad von 3, Oligo(propylenglykol)-Kresolether mit einem zahlenmittleren Propoxylierungsgrad von 12 sowie Oligo(propylenglykol)phenylether u. Oligo(propylenglykol)alkylphenylether mit einem zahlenmittleren Propoxylierungsgrad von 3 bis 12, aromatische Glykolether, p-Toluolsulfonsäureethylester, Alkylester aromatischer Sulfonsäuren, Tributoxyethylphosphat, Tri-n-butylphosphat und andere Phosphorsäureester. Selbstverständlich ist der Übergang von Filmbildehilfsmitteln zu äußeren Weichmachern fließend.

Bevorzugt wird jedoch das Prinzip der inneren Weichmachung angewendet (das selbstverständlich auch in Kombination mit äußerer Weichmachung angewendet werden kann). D.h. innerhalb der vorstehend aufgeführten Raster möglicher Monomerenzusammensetzungen wird letztere so gewählt, daß die statische Glasübergangstemperatur des Polymerisats P der geforderten Mindestfilmbildetemperatur im wesentlichen entspricht. Unter statischer Glasübergangstemperatur Tg wird hier die midpoint temperature nach ASTM D 3418-82 verstanden, ermittelt durch Differentialthermoanalyse DSC (vgl. auch Ullmann's Encyclopedia of Industrial Chemistry, VCH Weinheim (1992), S. 169 u. Zosel, Farbe und Lack 82 (1976), S. 125-134).

Nach Fox (T.G. Fox, Bull. Am. Phys.Soc. (Ser.II) 1, 123[1956]) und gemäß Ullmanns Encyclopädie der technischen Chemie, Bd. 19, 4. Auflage, Verlag Chemie, Weinheim (1980), S. 18, gilt für die statische Glasübergangstemperatur von höchstens schwach vernetzten Mischpolymerisaten in guter Näherung:

$$\frac{1}{T_g} = \frac{X^1}{T_g^{\,1}} + \frac{X^2}{T_g^{\,2}} + \ldots\ldots \frac{X^n}{T_g^{\,n}},$$

wobei $X^1$, $X^2$, ....., $X^n$ die Massenbrüche der Monomeren 1, 2, ....., n und $Tg^1$, $Tg^2$, ....., $Tg^n$ die statischen Glasübergangstemperaturen der jeweils nur aus einem der Monomeren 1, 2, ....., n aufgebauten Polymeren in Grad Kelvin bedeuten. Die statischen Glasübergangstemperaturen dieser Homopolymerisate der meisten ethylenisch ungesättigten Monomeren sind bekannt (bzw. können in einfacher an sich bekannter Weise experimentell ermittelt werden) und z.B. in J. Brandrup, E.H. Immergut, Polymer Handbook 1st Ed., J. Wiley, New York 1966, 2nd Ed.. J. Wiley, New York 1975, und 3rd Ed., J. Wiley, New York, 1989, sowie in Ullmann's Encyclopedia of Industrial Chemisty, VCH Weinheim (1992), S. 169 aufgeführt. Über die statische Glasübergangstemperatur läßt sich in dem Fachmann an sich bekannter weise auch die Frost-Tau-Beständigkeit der erfindungsgemäßen konservierenden Beschichtungen beeinflussen.

Die statische Glasübergangstemperatur der Verfilmungen der wäßrigen Dispersionen der erfindungsgemäßen Polymerisate beträgt > 20° bis 50°C.

In entsprechender Weise umfaßt die Monomerenzusammensetzung des erfindungsgemäßen Polymerisats P mit Vorteil

| | |
|---|---|
| 40 bis 60 Gew.-% | Methylmethacrylat (Monomeres a) |
| 40 bis 60 Gew.-% | n-Butylacrylat und/oder 2-Ethylhexylacrylat (Monomere b), |
| 0,5 bis 5 Gew.-% | wenigstens eines Monomeren der allgemeinen Formel I (Monomere c) und |
| 0,5 bis 5 Gew.-% | wenigstens eines Monomeren aus der Gruppe umfassend Acrylsäure, Methacrylsäure, Itaconsäure, die Alkalimetallsalze dieser Säuren, die Ammoniumsalze dieser Säuren, Acrylamid und Methacrylamid (Monomere d). |

Vorzugsweise beläuft sich die Gesamtmenge an Monomeren c und d dabei auf ≤ 6 Gew.-%, besonders bevorzugt auf ≤ 3 Gew.-%, bezogen auf die gesamte Monomerenzusammensetzung.

Die Herstellung des Polymerisats P erfolgt gemäß Anspruch 1.

Die Größe der in der wäßrigen Polymerisatdispersion dispergierten Polymerisatteilchen, d.h. ihr Durchmesser, wird in dem Fachmann an sich bekannter Weise insbesondere durch die Art und Menge an mitverwendetem Dispergiermittel bestimmt. In der Regel geht mit zunehmender Dispergiermittelmenge ein abnehmender Polymerisatteilchendurchmesser einher. Üblicherweise liegen die Durchmesser der dispergierten Polymerisatteilchen im Bereich von 10 bis 5000 nm, häufig hauptsächlich im Bereich von 10 bis 1000 nm.

Mit Vorteil beträgt der zahlenmittlere Durchmesser der im Rahmen des erfindungsgemäßen Verfahrens mit zu verwendenden wäßrigen Polymerisatdispersion 80 bis 400 nm, vorzugsweise 100 bis 300 nm und besonders bevorzugt 150 bis 250 nm.

Mit besonderem Vorteil ist die Häufigkeitsverteilung der Polymerisatteilchendurchmesser multimodal, d.h. sie weist mehr als ein Maximum auf. Bevorzugt beträgt die Anzahl der Maxima 2, 3 oder 4 (ermittelt mittels kapillarhydrodynamischer Fraktionierung (CHDF) gemäß J. of Colloid and Interface Science, Vol. 135, S. 165-177 (1990)).

Als Dispergiermittel kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 2000, häufig unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 100, Alkylrest: $C_4$ bis $C_{12}$), ethoxylierte Alkohole (EO-Grad: 3 bis 100, Alkylrest: $C_8$ bis $C_{18}$), sowie Alkali- und Ammoniumsalze von Alkylsulfaten (Alkylrest: $C_8$ bis $C_{16}$), von Schwefelsäurehalbestern oder einfachen Phosphorsäureestern ethoxylierter Alkohole (EO-Grad: 1 bis 70, Alkylrest: $C_{12}$ bis $C_{18}$) und ethoxylierter Alkylphenole (EO-Grad: 3 bis 100, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren wie Sulfobernsteinsäureester finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel II

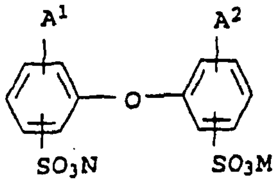

(II),

worin $A^1$ und $A^2$ Wasserstoff oder $C_4$- bis $C_{24}$-Alkyl bedeuten und nicht gleichzeitig Wasserstoff sind, und N und M Alkalimetallionen und/oder Ammoniumionen sein können, erwiesen. In der Formel II bedeuten $A^1$ und $A^2$ bevorzugt lineare oder verzweigte Alkylreste mit 6 bis 18 C-Atomen oder Wasserstoff, und insbesondere mit 6,12 und 16 C-Atomen, wobei $A^1$ und $A^2$ nicht beide gleichzeitig Wasserstoff sind. N und M sind bevorzugt Natrium, Kalium oder Ammoniumionen, wobei Natrium besonders bevorzugt ist. Besonders vorteilhaft sind Verbindungen II in denen N und M Natrium, $A^1$ ein verzweigter Alkylrest mit 12 C-Atomen und $A^2$ Wasserstoff oder $A^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company), Dowfax 3B2 und Dowfax 8390. Vorzugsweise werden die Verbindungen II im erfindungsgemäßen Verfahren für sich und besonders bevorzugt im Gemisch mit ethoxylierten Fettalkoholen und/oder Oxoalkoholen (EO-Grad: 3 bis 50, Alkylrest: $C_8$- bis $C_{36}$) als Dispergiermittel eingesetzt. Die Verbindungen II sind allgemein bekannt, z.B. aus der US-A 4,269,749, und im Handel erhältlich.

In der Regel beträgt die Menge an eingesetztem Dispergiermittel 0,5 bis 6, vorzugsweise 1 bis 3 Gew.-% bezogen auf die Menge der radikalisch zu polymerisierenden Monomeren.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxodisulfate, als auch um Azoverbindungen handeln. Häufig werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und vielfach kombinierte Systeme, die darüber hinaus eine geringe Menge einer im Polymerisationsmedium

löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/oder Ammoniumperoxidisulfat angewendet werden. Anstelle eines wasserlöslichen Eisen(II)-salzes wird häufig eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Zur Beeinflussung des Molekulargewichts können selbstverständlich das Molekulargewicht regelnde Verbindungen wie Mercaptane, z.B. Mercaptoethanol oder Thioglykolsäureester, im Rahmen der Polymerisation mitverwendet werden.

Polymerisationsdruck und Polymerisationstemperatur sind von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie , Butadien unter erhöhtem Druck polymerisiert.

Die Durchführung der radikalischen wäßrigen Emulsionspolymerisation zur Herstellung der Polymerisate P erfolgt nach dem Zulaufverfahren gemäß Anspruch 1.

Mit Vorteil beträgt diese vorgelegte Menge der Monomeren der allgemeinen Formel I 5 bis 100 Gew.-%, vorzugsweise 20 bis 90 Gew.-% und besonders bevorzugt 40 bis 80 Gew.-% der Gesamtmenge der insgesamt einzupolymerisierenden Monomeren der allgemeinen Formel I. Die im Rahmen dieser Verfahrensweise resultierenden erfindungsgemäß zu verwendenden wäßrigen Polymerisatdispersionen zeichnen sich durch eine erhöhte Stabilität der dispersen Verteilung der Polymerisatteilchen aus.

Ferner läßt sich über die einpolymerisierte Menge sowie über die Verteilung der Monomeren der allgemeinen Formel I zwischen Vorlage und Zulauf der Fließwiderstand der resultierenden wäßrigen Polymerisatdispersion in einfacher Weise in einem weiten Rahmen gezielt beeinflussen (ein geringer vorgelegter Mengenanteil bedingt einen geringeren Fließwiderstand, ein erhöhter vorgelegter Mengenanteil bedingt entsprechend einen erhöhten Fließwiderstand). Bei einem Feststoffvolumengehalt der resultierenden wäßrigen Polymerisatdispersion von 50 Vol.-% können beispielsweise dynamische Viskolitäten von 20 bis 1000 mPas (gemessen bei einer Schergeschwindigkeit von 250 $sec^{-1}$ sowie 25°C und 1 atm nach DIN 53019) gezielt eingestellt werden.

Bevorzugter Polymerisationsinitiator ist beim Zulaufverfahren Natriumperoxodisulfat und die Polymerisationstemperatur beträgt vorzugsweise 75 bis 95°C. In der Regel erfolgt die Polymerisation unter Inertgasatmosphäre.

Das zahlenmittlere Molekulargewicht des erfindungsgemäßen Polymerisats P liegt üblicherweise bei $2 \cdot 10^4$ bis $2 \cdot 10^6$, vorzugsweise bei $2{,}5 \cdot 10^5$ bis $7{,}5 \cdot 10^5$. Ein in einfacher Weise zugängliches Maß für das mittlere Molekulargewicht des erfindungsgemäßen Polymerisats P ist dessen K-Wert. Der K-Wert ist eine relative Viskositätszahl, die in Analogie zur DIN 53 726 bestimmt wird. Er beinhaltet die Fließgeschwindigkeit eines reinen Lösungsmittels relativ zur Fließgeschwindigkeit einer Lösung des Polymerisats in diesem Lösungsmittel und charakterisiert das mittlere Molekulargewicht des Polymerisats. Ein hoher K-Wert entspricht dabei einem hohen mittleren Molekulargewicht (vgl. Cellulosechemie, Vol. 13 (1932), S. 58 bis 64, und Kirk-Othmer, Encyclopedia of Chemical Technology, Vol. 23, S. 967 bis 968).

Der K-Wert der erfindungsgemäßen Polymerisate P (23°C, 0,5 gew-%ige Lösung in Dimethylformamid (DMF)) beträgt mit Vorteil 50 bis 110, bevorzugt 60 bis 100, besonders bevorzugt 75 bis 95 und ganz besonders bevorzugt 80 bis 90.

Bevorzugt erfolgt die Herstellung des erfindungsgemäßen Polymerisats P nach der Methode der radikalischen wäßrigen Emulsionspolymerisation bei einem pH-Wert des wäßrigen Dispergiermediums $< 6$. Durch Zusatz von Alkalihydroxid und/oder Ammoniak wird anschließend ein pH-Wert des wäßrigen Dispergiermediums von 6 bis 10, bevorzugt von 7 bis 9 eingestellt. Die einen solchermaßen erhöhten pH-Wert des wäßrigen Dispergiermediums aufweisenden wäßrigen Polymerisatdispersionen eignen sich für die erfindungsgemäße Konservierung in besonderer Weise. Der Feststoffgehalt der im Rahmen des erfindungsgemäßen Verfahrens anzuwendenden wäßrigen Polymerisatdispersionen liegt üblicherweise bei 20 bis 60 Gew.-%.

Die wäßrige Dispersion des Polymerisats P kann im Rahmen des erfindungsgemäßen Verfahrens sowohl für sich, als auch mit Zusätzen gemäß Anspruch 3 versehen zur Konservierung eines mineralischen Formkörpers eingesetzt werden.

Üblicherweise beträgt die Auftragsmenge der zur Konservierung aufzubringenden wäßrigen Polymerisatzubereitung 100 bis 700 $g/m^2$ (naß gerechnet). Der Auftrag kann in an sich bekannter Weise durch Spritzen, Spachteln, Rakeln, Rollen oder Gießen erfolgen. Wesentlich ist, daß das erfindungsgemäße Verfahren sowohl bei bereits erhärteten als auch bei gerade frisch zubereiteten ("grünen") mineralischen Formkörpern angewendet werden kann. Es eignet sich insbesondere zur Konservierung von mineralischen Formkörpern, die Zement als mineralisches Bindemittel enthalten (sogenannte Betonsteine). In besonders vorteilhafter Weise verhindert es Ausblühungen auf Betondachsteinen. Letztere stellt man aus Zementmörteln her, deren Konsistenz die endgültige Formgebung ermöglicht. Ihre Erhärtung erfolgt meist

bei Temperaturen zwischen 40 und 100°C. Die Betondachsteine werden nach der Formgebung (z.B. mittels Extrusion), aber in der Regel vor der Erhärtung, oberflächlich mit einer erfindungsgemäß anzuwendenden wäßrigen Zusammensetzung beschichtet und dann für 6 bis 12 h in Härtekammern, in denen üblicherweise die obengenannten Temperaturen herrschen, gelagert. In dieser Zeit härten sie aus und zugleich verfilmt die Beschichtungsmasse zu einem konservierenden Film. Mitunter wird ein weiterer Auftrag mit Beschichtungsmasse nach der Aushärtung mit anschließender Trocknung vorgenommen.

Beispiele

A) Herstellung von erfindungsgemäßen wäßrigen Polymerisatdispersionen von Polymerisaten P (ED) sowie von Vergleichsdispersionen (VD)

VD1: In ein Polymerisationsgefäß mit einem Volumeninhalt von 3 l wurden 570 g Wasser und 4 g einer 35 gew.-%igen wäßrigen Lösung des Schwefelsäurehalbesters von ethoxyliertem (EO-Grad= 25) Nonylphenol (= Emulgatorlösung 1) vorgelegt und auf 80°C erwärmt.

In einem ersten, gerührten, Zulaufgefäß wurde als Zulauf 1 eine Monomerenemulsion aus

| | |
|---|---|
| 590 g | Wasser, |
| 56 g | Emulgatorlösung 1, |
| 560 g | Styrol und |
| 840 g | n-Butylacrylat |

hergestellt. In einem zweiten Zulaufgefäß wurde ein Zulauf 2 aus

| | |
|---|---|
| 6 g | Natriumperoxodisulfat und |
| 200 g | Wasser |

hergestellt.

Zu der 80°C aufweisenden Vorlage wurden nacheinander auf einmal 80 g Zulauf 1 und 12 g Zulauf 2 zugegeben und 15 min bei 80°C polymerisiert. Anschließend wurden die Restmengen der Zuläufe 1 und 2 dem Polymerisationsgefäß unter Aufrechterhaltung der 80°C zeitgleich beginnend innerhalb von 3 h kontinuierlich zugeführt (über räumlich getrennte Zuläufe). Anschließend wurde noch 1 h bei 80°C nachpolymerisiert. Dann wurde auf 25°C abgekühlt und der pH-Wert des wäßrigen Dispergiermediums mittels 25 gew.-%iger wäßriger Ammoniaklösung auf einen Wert von 8 erhöht. Danach wurden bei 60°C 0,5 Gew.-%, bezogen auf das dispergierte Polymerisat, Benzophenon eingerührt.

Der Feststoffgehalt der resultierenden wäßrigen Polymerisatdispersion VD1 betrug 50,1 Gew.-%. Der K-Wert des dispergierten Polymerisats (23°C, 0,5 gew.-%ig in DMF) betrug 64 und der Tg-Wert der Verfilmung lag bei 3°C.

VD2: Wie VD1, die Polymerisationstemperatur betrug jedoch 90°C. Außerdem wurde kein Benzophenon eingerührt und ferner waren Vorlage und Zuläufe wie folgt zusammengesetzt;

| | | |
|---|---|---|
| Vorlage | 570 g | Wasser und |
| | 3 g | einer 45 gew.-%igen wäßrigen Lösung des in Dowfax 2A1 enthaltenen Emulgators (= Emulgatorlösung 2); |
| Zulauf 1 | 603 g | Wasser, |
| | 44 g | Emulgatorlösung 2, |
| | 630 g | Styrol, |
| | 770 g | 2-Ethylhexylacrylat und |
| | 35 g | Acrylsäure; |
| Zulauf 2 | 7 g | Natriumperoxodisulfat und |
| | 200 g | Wasser. |

Der Feststoffgehalt der resultierenden wäßrigen Polymerisatdispersion VD2 betrug 50,4 Gew.-%. Der K-Wert der dispergierten Polymerisats (23°C, 0,5 gew.-%ig in DMF) betrug 66 und der Tg-Wert der Verfilmung lag bei +6°C.

VD3: Wie VD2, jedoch waren Vorlage und Zuläufe wie folgt zusammengesetzt:

| | | |
|---|---|---|
| Vorlage | 580 g | Wasser und |
| | 3 g | Emulgatorlösung 2; |
| Zulauf 1 | 603 g | Wasser, |
| | 44 g | Emulgatorlösung 2, |
| | 420 g | Methylmethacrylat, |
| | 490 g | n-Butylmethacrylat, |
| | 490 g | n-Butylacrylat und |
| | 35 g | Acrylsäure; |
| Zulauf 2 | 7 g | Natriumperoxodisulfat und |
| | 200 g | Wasser. |

Der Feststoffgehalt der resultierenden wäßrigen Polymerisatdispersion VD3 betrug 50,2 Gew.-%. Der K-Wert des dispergierten Polymerisats (23°C, 0,5 gew.-% in DMF) betrug 82 und der Tg-Wert der Verfilmung lag bei 11°C.

VD4: Wie VD2, die Polymerisationstemperatur betrug jedoch 85°C und die Erhöhung des pH-Wertes erfolgte anstelle mittels Ammoniak mittels einer 20 gew.-%igen wäßrigen KOH-Lösung. Außerdem waren Vorlage und Zuläufe wie folgt zusammengesetzt:

| | | |
|---|---|---|
| Vorlage | 549 g | Wasser, |
| | 5 g | einer 30 gew.-%igen wäßrigen Lösung des Natriumsalzes des Schwefelsäurehalbesters von ethoxyliertem (EO-Grad: 20) $C_{13}$-Oxoalkohol(gesättigt) (= Emulgatorlösung 3) und |
| | 7 g | einer 20 gew.-%igen wäßrigen Lösung eines ethoxylierten (EO-Grad: 30) $C_{13}/C_{15}$-Oxoalkohol (gesättigt)-Gemischs (= Emulgator-lösung 4); |
| Zulauf 1 | 558 g | Wasser, |
| | 42 g | Emulgatorlösung 3, |
| | 28 g | Emulgatorlösung 4, |
| | 700 g | Methylmethacrylat, |
| | 700 g | n-Butylacrylat, |
| | 22 g | 50 gew.-%ige wäßrige Acrylamidlösung und |
| | 28 g | 50 gew.-%ige wäßrige Lösung von Vinylsulfonsäure; |
| Zulauf 2 | 7 g | Natriumperoxodisulfat und |
| | 200 g | Wasser. |

Der Feststoffgehalt der resultierenden wäßrigen Polymerisatdispersion VD4 betrug 52,5 Gew.-%. Der K-Wert des dispergierten Polymerisats (23°C, 0,5 gew.-%ig in DMF) betrug 63 und der Tg-Wert der Verfilmung lag bei 17°C.

ED6: Wie VD2, jedoch waren Vorlage und Zuläufe wie folgt zusammengesetzt:

| | | |
|---|---|---|
| Vorlage | 502 g | Wasser, |
| | 10 g | Emulgatorlösung 2 und |
| | 12 g | einer 50 gew.-%igen wäßrigen Lösung des Natriumsalzes der 2-Acrylamido-2-methylpropansulfonsäure; |

(fortgesetzt)

| | | |
|---|---|---|
| Zulauf 1 | 523 g | Wasser, |
| | 56 g | Emulgatorlösung 2, |
| | 780 g | Methylmethacrylat, |
| | 720 g | n-Butylacrylat, |
| | 10 g | einer 50 gew.-%igen wäßrigen Lösung von Acrylamid und |
| | 18 g | einer 50 gew.-%igen wäßrigen Lösung des Natriumsalzes der 2-Acrylamido-2-methylpropansulfonsäure; |
| Zulauf 2 | 7 g | Natriumperoxodisulfat und |
| | 200 g | Wasser. |

Der Feststoffgehalt der resultierenden wäßrigen Polymerisatdispersion ED6 betrug 54,2 Gew.-%. Der K-Wert des dispergierten Polymerisats (23°C, 0,5 gew.-%ig in DMF) betrug 93 und der Tg-Wert der Verfilmung lag bei 28°C.

ED7: Wie VD2, die Polymerisationstemperatur betrug jedoch 85°C. Außerdem waren Vorlage und Zuläufe wie folgt zusammengesetzt:

| | | |
|---|---|---|
| Vorlage | 534 g | Wasser, |
| | 9 g | Emulgatorlösung 2 und |
| | 14 g | einer 50 gew.-%igen wäßrigen Lösung des Natriumsalzes der 2-Acrylamido-2-methylpropansulfonsäure; |
| Zulauf 1 | 552 g | Wasser, |
| | 37 g | Emulgatorlösung 2, |
| | 15 g | einer 28 gew.-%igen wäßrigen Lösung des Natriumsalzes des Schwefelsäurehalbesters von ethoxyliertem (EO-Grad: 3) $C_{12}/C_{14}$-Fettalkohol (gesättigt) -Gemisch (= Emulgatorlösung 7), |
| | 742 g | Methylmethacrylat, |
| | 658 g | n-Butylacrylat, |
| | 7 g | Methacrylsäure und |
| | 14 g | einer 50 gew.-%igen wäßrigen Lösung des Natriumsalzes von 2-Acrylamido-2-methylpropansulfonsäure: |
| Zulauf 2 | 3 g | Natriumperoxodisulfat und |
| | 200 g | Wasser. |

Der Feststoffgehalt der resultierenden wäßrigen Polymerisatdispersion ED7 betrug 54,4 Gew.-%. Der K-Wert des dispergierten Polymerisats (23°C, 0,5 gew.-%ig in DMF) betrug 97 und der Tg-Wert der Verfilmung lag bei 26°C.

ED8: Wie VD2, die Polymerisationstemperatur betrug jedoch 85°C und die Erhöhung des pH-Wertes erfolgte mittels 20 gew.-%iger wäßriger Natriumhydroxidlösung. Außerdem waren Vorlage und Zuläufe wie folgt zusammengesetzt.

| | | |
|---|---|---|
| Vorlage | 471 g | Wasser, |
| | 7 g | Emulgatorlösung 1 |
| | 6 g | Emulgatorlösung 4 und |
| | 14 g | einer 50 gew.-%igen wäßrigen Lösung von AMPS; |
| Zulauf 1 | 486 g | Wasser, |
| | 29 g | Emulgatorlösung 1, |
| | 13 g | Emulgatorlösung 4, |
| | 675 g | Methylmethacrylat, |
| | 575 g | n-Butylacrylat, |
| | 13 g | Methacrylsäure und |
| | 13 g | einer 50 gew.-%igen wäßrigen Lösung von Methacrylamid; |

(fortgesetzt)

| | | |
|---|---|---|
| Zulauf 2 | 5 g | Natriumperoxodisulfat und |
| | 190 g | Wasser. |

Der Feststoffgehalt der resultierenden wäßrigen Polymerisatdispersion ED8 betrug 52,6 Gew.-%. Der K-Wert des dispergierten Polymerisats (23°C, 0,5 gew.-%ig in DMF) betrug 87 und der Tg-Wert der Verfilmung lag bei 29°C. Verfilmung lag bei 16°C.

ED10: Wie VD2, jedoch waren Vorlage und Zuläufe wie folgt zusammengesetzt:

| | | |
|---|---|---|
| Vorlage | 573 g | Wasser; |
| | 10 g | Emulgatorlösung 2 und |
| | 15 g | einer 50 gew.-%igen wäßrigen Lösung des Ammoniumsalzes der 2-Acrylamido-2-methylpropansulfonsäure; |
| Zulauf 1 | 594 g | Wasser; |
| | 57 g | Emulgatorlösung 2, |
| | 780 g | Methylmethacrylat, |
| | 720 g | n-Butylacrylat, |
| | 9 g | einer 50 gew.-%igen wäßrigen Lösung von Acrylamid und |
| | 15 g | einer 50 gew.-%igen wäßrigen Lösung des Ammoniumsalzes der 2-Acrylamido-2-methylpropansulfonsäure; |
| Zulauf 2 | 8 g | Natriumperoxodisulfat und |
| | 300 g | Wasser. |

Der Feststoffgehalt der resultierenden wäßrigen Polymerisatdispersion ED10 betrug 50,3 Gew.-%. Der K-Wert des dispergierten Polymerisats (23°C, 0,5 gew.-%ig in DMF) betrug 84 und der Tg-Wert der Verfilmung lag bei 21°C.

B) Beschichtungstest auf Betonformkörpern

Die wäßrigen Polymerisatdispersionen aus A) wurden mit Wasser auf einen Polymerisatgehalt von 40 Gew.-% verdünnt. Anschließend wurden 0,5 Gew.-%, bezogen auf die wäßrige Polymerisatdispersion, eines handelsüblichen Entschäumers zugesetzt.

Mit dem erhaltenen Beschichtungsmittel wurden "grüne" Betonformkörper auf einer der beiden Grundflächen mit einer Spritzpistole (etwa 2 bar Spritzdruck) gleichmäßig besprüht, bis ein Naßauftrag von 120 g/$m^2$ erfolgt war.

Die "grünen" Betonformkörper wurden als Flachsteine der Abmessungen 30x20x1,8 cm durch Extrusion eines Mörtels aus Sand (Korngröße bis zu 0,3 mm) und Zement (Gewichtsverhältnis 1:3) sowie Wasser bei einem Wasser/Zement-Gewichtsverhältnis von 0,4 hergestellt, wobei der Sand mit Eisenoxidpigment schwarz eingefärbt war. Zur Härtung wurden die beschichteten Betonformkörper im Klimaschrank 30 Minuten bei 50 % relativer Luftfeuchtigkeit bei einer Temperatur von 60°C getrocknet. Anschließend wurden diejenigen Betonformkörper, deren Beschichtungen Benzophenon enthielten, 10 min bei Raumklima mit einer 10 W-UV-Lampe bestrahlt. Die Betonformkörper, deren Beschichtungen kein Benzophenon enthielten, wurden in entsprechender Weise 10 min bei Raumklima gelagert. Danach wurden die Betonformkörper nochmals 2,5 h bei 60°C und 50 % relativer Luftfeuchtigkeit und daran anschließend nochmals 3 h bei 60°C und 95 % relativer Luftfeuchtigkeit im Klimaschrank -getrocknet. Anschließend wurden die Betonformkörper 24 h bei Raumklima gelagert. Danach wurde die beschichtete Seite des Steins 7 Tage lang eine Temperatur von 60°C aufweisendem Wasserdampf ausgesetzt. Nach darauffolgender 24 stündiger Trocknung bei Raumklima wurde die Beschichtung visuell beurteilt. Die Ergebnisse enthält die nachfolgende Tabelle in Abhängigkeit von der jeweils verwendeten Polymerisatdispersion aus A) in Form von numerischen Werten. Dabei entsprechen die numerischen Werte dem wie folgt zugeordneten Grad an beobachtbarer Ausblühung:

0 = keine Ausblühung
1 = sehr wenig Ausblühungen
2 = wenig Ausblühungen
3 = zahlreiche Ausblühungen
4 = viele Ausblühungen
5 = sehr viele Ausblühungen

Tabelle

| Verwendete wäßrige Polymerisatdispersion | Ausblühbeurteilung |
|---|---|
| VD1 | 3 |
| VD2 | 3 |
| VD3 | 5 |
| VD4 | 5 |
| ED6 | 0 |
| ED7 | 0 |
| ED8 | 0 |
| ED10 | 0 |

**Patentansprüche**

**1.** Wäßrige Polymerisatdispersion, deren Verfilmung eine statische Glasübergangstemperatur von >20°C bis +50°C aufweist, **dadurch** erhältlich, daß ein Gemisch von wenigstens eine ethylenisch ungesättigte Gruppe aufweisenden Monomeren, das wenigstens ein Monomer der allgemeinen Formel I

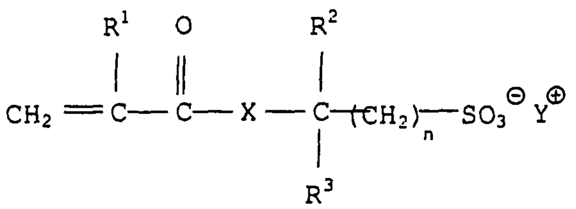

I

in der die Variablen folgende Bedeutung haben:

n = 0 bis 2,
$R^1$,$R^2$,$R^3$ = unabhängig voneinander Wasserstoff oder die Methylgruppe,
X = Sauerstoff oder die Iminogruppe (NH) und
Y = Wasserstoff, Alkalimetall oder Ammonium,

umfaßt, nach der Methode der radikalischen wäßrigen Emulsionspolymerisation wie folgt polymerisiert wird:

a) 10 bis 50 Gew.-% des insgesamt zu verwendenden Wassers, 0 bis 50 Gew. % des insgesamt zu verwendenden Dispergiermittels und wenigstens 5 Gew.-% der Gesamtmenge der zu polymerisierenden Monomeren der allgemeinen Formel I wird in ein Polymerisationsgefäß vorlegt und auf die Polymerisationstemperatur erwärmt,
b) aus der Restmenge der Gesamtmenge der zu polymerisierenden Monomeren der allgemeinen Formel I, der Gesamtmenge der sonstigen zu polymerisierenden Monomeren, der Restmenge des Dispergiermittels und 10 bis 50 Gew.-% des insgesamt zu verwenden Wassers wird eine Monomerenemulsion erzeugt, die einen Zulauf 1 bildet,
c) die Gesamtmenge des zu verwendenden Polymerisationsinitiators wird in 1 bis 20 Gew.-% des insgesamt zu verwendenden Wassers gelöst und so ein Zulauf 2 erzeugt,
d) der auf die Polymerisationstemperatur erwärmten Vorlage werden 1 bis 10 Gew.-% des Zulaufs 1 und 1 bis 10 Gew.-% des Zulauf 2 zufügt und das dabei resultierende Gemisch bis zu einem Umsatz der enthaltenen Monomeren von wenigstens 80 mol-% polymerisiert und
e) anschließend wird die Restmenge der Zuläufe 1 und 2 unter Aufrechterhaltung der Polymerisation dem Polymerisationsgefäß räumlich getrennt kontinuierlich zugeführt.

**2.** Wäßrige Polymerisatdispersion, gemäß Anspruch 1, deren in disperser Verteilung befindliches Polymerisat P in radikalisch polymerisierter Form einpolymerisiert enthält

90 bis 99,5 Gew.-% wenigstens eines Monomeren aus der Gruppe umfassend Ester der Acrylsäure mit 1 bis 8 C-Atome aufweisenden Alkanolen, Ester der Methacrylsäure mit 1 bis 8 C-Atome aufweisenden Alkanolen, Styrol, α-Methylstyrol, o-Chlorstyrol und Vinyltoluole"
0 bis 5 Gew.-% eines oder mehrere Monomere aus der Gruppe umfassend Acrylsäure, Methacrylsäure, Itaconsäure, die Alkalimetallsalze dieser Säuren, die Ammoniumsalze dieser Säuren, Acrylamid und Methacrylamid und
0,5 bis 5 Gew.-% wenigstens eines Monomeren der allgemeinen Formel I

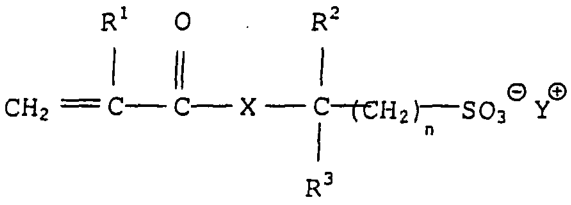

in der die Variablen folgende Bedeutung haben:

n = 0 bis 2,
$R^1,R^2,R^3$ = unabhängig voneinander Wasserstoff oder die Methylgruppe,
X = Sauerstoff oder die Iminogruppe (NH) und
Y = Wasserstoff, Alkalimetall oder Ammonium.

**3.** Verfahren zur Konservierung einer Betonröhre oder eines Betondachsteins durch Beschichten der Oberfläche des mineralischen Formkörpers mit einer wäßrigen Zusammensetzung, bestehend aus einer wäßrigen Polymerisatdispersion , deren Verfilmung eine statische Glasübergangstemperatur von >20°C bis +50°C aufweist, bestehend aus einem in disperser Verteilung befindlichem Polymerisat P , **dadurch gekennzeichnet, dass** die wäßrige Polymerisatdispersion des Polymerisats P eine solche ist, die nach der Methode der radikalischen wäßrigen Emulsionspolymerisation erhältlich ist, wobei man

a) 10 bis 50 Gew.-% des insgesamt zu verwendenden Wassers, 0 bis 50 Gew.% des insgesamt zu verwendenden Dispergiermittels und wenigstens einen Teil der Gesamtmenge der zupolymerisierenden Monomeren der allgemeinen Formel I in ein Polymerisationsgefäß vorlegt und auf die Polymerisationstemperatur erwärmt,
b) aus der Restmenge der Gesamtmenge der zu polymerisierenden Monomeren der allgemeinen Formel I, der Gesamtmenge der sonstigen zu polymerisierenden Monomeren, der Restmenge des Dispergiermittels und 10 bis 50 Gew.-% des insgesamt zu verwendenden Wassers eine Monomerenemulsion erzeugt, die einen Zulauf 1 bildet,
c) die Gesamtmenge des zu verwendenden Polymerisationsinitiators in 1 bis 20 Gew.-% des insgesamt zu verwendenden Wassers löst und so einen Zulauf 2 erzeugt,
d) der auf die Polymerisationstemperaturerwärmten Vorlage 1 bis 10 Gew.-% des Zulauf 1 und 1 bis 10 Gew.-% des Zulauf 2 zufügt und das dabei resultierende Gemisch bis zu einem Umsatz der enthaltenen Monomeren von wenigstens 80 mol-% polymerisiert und
e) anschließend die Restmenge der Zuläufe 1 und 2 unter Aufrechterhaltung der Polymerisation räumlich getrennt dem Polymerisationsgefäß kontinuierlich zuführt, und

**dadurch gekennzeichnet, dass** das Polymerisat P in radikalisch polymerisierter Form einpolymerisiert enthält

90 bis 99,5 Gew.-% wenigstens eines Monomeren aus der Gruppe umfassend Ester der Acrylsäure mit 1 bis 8 C-Atome aufweisenden Alkanolen, Ester der Methacrylsäure mit 1 bis 8 C-Atome aufweisenden Alkanolen, Styrol, α-Methylstyrol, o-Chlorstyrol und Vinyltoluole,
0,5 bis 5 Gew.-% wenigstens eines Monomeren der allgemeinen Formel I und
0 bis 5 Gew.-% eines oder mehrere Monomere aus der Gruppe umfassend Acrylsäure, Methacrylsäure, Itaconsäure, die Alkalimetallsalze dieser Säuren, die Ammoniumsalze dieser Säuren, Acrylamid und Methacrylamid, und

wenigstens einen aus der Gruppe der Schutzkolloide, Emulgatoren, Polymerisationsinitiatoren, Molekulargewichtsreglern, aromatische Ketone, Titandioxid, Eisonoxide, Netzmittel, Fungizide, Entschäumer, Verdickungsmittel, ausgewählten zusatzstoffe.

## Claims

**1.** An aqueous polymer dispersion whose resultant film has a static glass transition temperature of >20°C to +50°C, obtainable by polymerizing a mixture of monomers having at least one ethylenically unsaturated group, which mixture includes at least one monomer of the general formula I

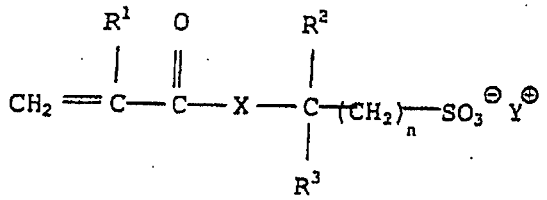

I

where the variables have the following meanings:

n is 0 to 2,
$R^1$, $R^2$, $R^3$ are, independently of one another, hydrogen or the methyl group,
X is oxygen or the imino group (NH) and
Y is hydrogen, alkali metal or ammonium,

by the method of free-radical aqueous emulsion polymerization as follows:

a) from 10 to 50% by weight of the total water to be used, from 0 to 50% by weight of the total dispersant to be used and at least 5% by weight of the total amount of monomers of the general formula I to be polymerized are initially charged into a polymerization vessel and are heated to the polymerization temperature,
b) a monomer emulsion is produced from the remaining amount of the total amount of the monomers of the general formula I to be polymerized, the total amount of the other monomers to be polymerized, the remaining amount of the dispersant and from 10 to 50% by weight of the total water to be used, which monomer emulsion forms a feed stream 1,
c) the total amount of the polymerization initiator to be used is dissolved in from 1 to 20% by weight of the total water to be used and a feed stream 2 is thus produced,
d) from 1 to 10% by weight of the feed stream 1 and from 1 to 10% by weight of the feed stream 2 are added to the initial charge heated to the polymerization temperature and the resulting mixture is polymerized to a conversion of the monomers present of at least 80 mol% and
e) the remaining amount of the feed streams 1 and 2 are subsequently fed continuously and physically separately into the polymerization vessel with maintenance of the polymerization.

**2.** An aqueous polymer dispersion as claimed in claim 1 whose dispersed polymer P comprises

from 90 to 99.5% by weight of at least one monomer from the group encompassing esters of acrylic acid with alkanols having from 1 to 8 carbon atoms, esters of methacrylic acid with alkanols having from 1 to 8 carbon atoms, styrene, α-methylstyrene, o-chlorostyrene and vinyltoluenes,
from 0 to 5% by weight of one or more monomers from the group encompassing acrylic acid, methacrylic acid, itaconic acid, the alkali metal salts of these acids, the ammonium salts of these acids, acrylamide and methacrylamide and
from 0.5 to 5% by weight of at least one monomer of the general formula I

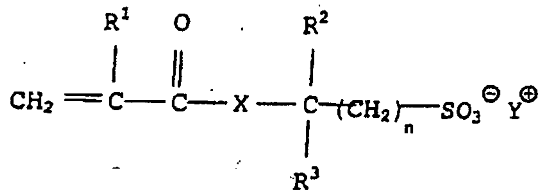

where the variables have the following meanings:

n is 0 to 2,
$R^1$, $R^2$, $R^3$ are, independently of one another, hydrogen or the methyl group,
X is oxygen or the imino group (NH) and
Y is hydrogen, alkali metal or ammonium,

polymerized into it in free-radically polymerized form.

**3.** A process for preserving a concrete pipe or a concrete roofing tile by coating the surface of the mineral molding with an aqueous composition comprising an aqueous polymer dispersion whose resultant film has a static glass transition temperature of from >20°C to +50°C and comprises a dispersed polymer P, wherein the aqueous polymer dispersion of the polymer P is one obtainable by the method of free-radical aqueous emulsion polymerization, where

a) from 10 to 50% by weight of the total water to be used, from 0 to 50% by weight of the total dispersant to be used and at least a part of the total amount of monomers of the general formula I to be polymerized are initially charged into a polymerization vessel and are heated to the polymerization temperature,
b) a monomer emulsion is produced from the remainder of the total amount of the monomers of the general formula I to be polymerized, the total amount of the other monomers to be polymerized, the remaining amount of the dispersant and from 10 to 50% by weight of the total water to be used, which monomer emulsion forms a feed stream 1,
c) the total amount of the polymerization initiator to be used is dissolved in from 1 to 20% by weight of the total water to be used and a feed stream 2 is thus produced,
d) from 1 to 10% by weight of the feed stream 1 and from 1 to 10% by weight of the feed stream 2 are added to the initial charge heated to the polymerization temperature and the resulting mixture is polymerized to a conversion of the monomers present of at least 80 mol% and
e) the remaining amount of the feed streams 1 and 2 is subsequently fed continuously and physically separately into the polymerization vessel with maintenance of the polymerization, and **characterized in that** the polymer P comprises

from 90 to 99.5% by weight of at least one monomer from the group encompassing esters of acrylic acid with alkanols having from 1 to 8 carbon atoms, esters of methacrylic acid with alkanols having from 1 to 8 carbon atoms, styrene, $\alpha$-methylstyrene, o-chlorostyrene and vinyltoluenes,
from 0.5 to 5% by weight of at least one monomer of the general formula I and
from 0 to 5% by weight of one or more monomers from the group encompassing acrylic acid, methacrylic acid, itaconic acid, the alkali metal salts of these acids, the ammonium salts of these acids, acrylamide and methacrylamide and at least one additive selected from the group consisting of protective colloids, emulsifiers, polymerization initiators, molecular weight regulators, aromatic ketones, titanium dioxide, iron oxides, wetting agenst, fungicides, antifoams and thickeners polymerized into

it in free-radically polymerized form.

## Revendications

**1.** Dispersion aqueuse de polymère dont l'enfilmage présente une température de transition vitreuse statique comprise entre > 20 °C à +50 °C, pouvant être obtenue en polymérisant un mélange de monomères présentant - au moins un groupe éthyléniquement insaturé, qui comprend au moins un monomère de formule générale I :

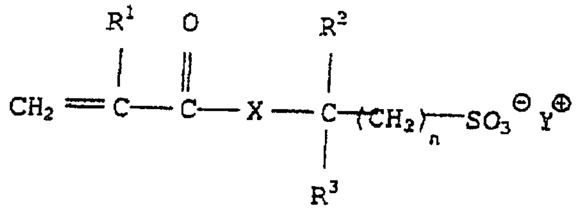

I

dans laquelle les variables ont la signification suivante :

n = 0 à 2,
$R^1$, $R^2$, $R^3$ = indépendamment les uns des autres hydrogène ou le groupe méthyle,
X = oxygène ou le groupe imino (NH) et
Y = hydrogène, métal alcalin ou ammonium,

par la méthode de la polymérisation en émulsion aqueuse par voie radicalaire, comme suit :

a) 10 à 50 % en poids de la totalité de l'eau à utiliser, 0 à 50 % en poids de la totalité de l'agent de dispersion à utiliser et au moins 5 % en poids de la quantité totale des monomères à polymériser de formule générale I sont chargés dans une cuve de polymérisation et chauffés à la température de polymérisation,
b) à partir de la quantité restante issue de la quantité totale des monomères à polymériser de formule générale I, de la quantité totale des autres monomères à polymériser, de la quantité restante de l'agent de dispersion et de 10 à 50 % en poids de la totalité de l'eau à utiliser, une émulsion de monomères est produite, qui forme une alimentation 1,
c) la quantité totale de l'initiateur de polymérisation à utiliser est dissoute dans 1 à 20 % en poids de la totalité de l'eau à utiliser et produit ainsi une alimentation 2,
d) 1 à 10 % en poids de l'alimentation 1 et 1 à 10 % en poids de l'alimentation 2 sont ajoutés au chargement réchauffé à la température de polymérisation et le mélange résultant polymérise jusqu'à une conversion des monomères contenus d'au moins 80 % en moles et
e) la quantité restante des alimentations 1 et 2 est ensuite amenée de manière spatialement séparée à la cuve de polymérisation avec maintien de la polymérisation en continu.

**2.** Dispersion aqueuse de polymère, selon la revendication 1, dont le polymère P se trouvant en une répartition dispersée contient à l'état copolymérisé sous une forme polymérisée par voie radicalaire : 90 à 99,5 % en poids d'au moins un monomère du groupe comprenant des esters d'acide acrylique avec des alcanols présentant 1 à 8 atomes de C, des esters de l'acide méthacrylique avec des alcanols présentant 1 à 8 atomes de C, le styrène, l'$\alpha$-méthylstyrène, l'o-chlorostyrène et des vinyltoluènes,
0 à 5 % en poids d'un ou plusieurs monomères du groupe comprenant l'acide acrylique, l'acide méthacrylique, l'acide itaconique, les sels de métal alcalin de ces acides, les sels d'ammonium de ces acides, de l'acrylamide et du méthacrylamide et
0,5 à 5 % en poids d'au moins un monomère de formule générale I :

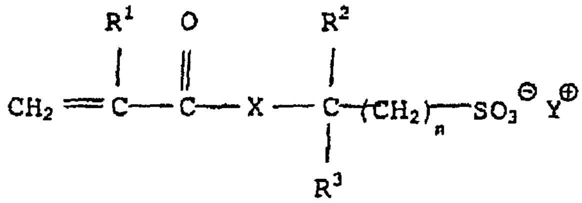

dans laquelle les variables ont la signification suivante :
n = 0 à 2,
$R^1$, $R^2$, $R^3$ = indépendamment les uns des autres hydrogène ou le groupe méthyle,
X = oxygène ou le groupe imino (NH) et
Y = hydrogène, métal alcalin ou ammonium.

**3.** Procédé de conservation d'un tuyau en béton ou d'une tuile en béton par enduction de la surface du corps moulé minéral avec une composition aqueuse constituée d'une dispersion polymère aqueuse, dont l'enfilmage présente une température de transition vitreuse statique comprise entre > 20 °C à +50 °C, se composant d'un polymère P se trouvant en une répartition dispersée, **caractérisé en ce que** la dispersion aqueuse du polymère P peut être obtenue par le procédé de polymérisation en émulsion aqueuse par voie radicalaire, comprenant les étapes consistant à :

a) charger dans une cuve de polymérisation 10 à 50 % en poids de la totalité de l'eau à utiliser, 0 à 50 % en poids de la totalité de l'agent de dispersion à utiliser et au moins une partie de la quantité totale des monomères à polymériser de formule générale 1 et chauffer à la température de polymérisation,
b) à partir de la quantité restante de la quantité totale des monomères à polymériser de formule générale I, de la quantité totale des autres monomères à polymériser, de la quantité restante de l'agent de dispersion et de 10 à 50 % en poids de la totalité de l'eau à utiliser, produire une émulsion de monomères, qui forme une alimentation 1,
c) dissoudre la quantité totale de l'initiateur de polymérisation à utiliser dans 1 à 20 % en poids de la totalité de l'eau à utiliser et produire ainsi une alimentation 2,
d) ajouter 1 à 10 % en poids de l'alimentation 1 et 1 à 10 % en poids de l'alimentation 2 au chargement réchauffé à la température de polymérisation et polymériser le mélange résultant jusqu'à une conversion d'au moins 80 % en moles des monomères contenus et
e) amener ensuite en continu la quantité restante des alimentations 1 et 2 de manière spatialement séparée à la cuve de polymérisation en maintenant la polymérisation, et

**caractérisé en ce que** le polymère P contient à l'état copolymérisé sous une forme polymérisée par voie radicalaire :
90 à 99,5 % en poids d'au moins un monomère du groupe comprenant des esters de l'acide acrylique avec des alcanols présentant 1 à 8 atomes de C, des esters de l'acide méthacrylique avec des alcanols présentant de 1 à 8 atomes de C, le styrène, l'α-methylstyrène, l'o-chlorostyrène et des vinyltoluènes,
0,5 à 5 % en poids d'au moins un monomère de formule générale I et
0 à 5 % en poids d'un ou plusieurs monomères du groupe comprenant l'acide acrylique, l'acide méthacrylique, l'acide itaconique, les sels de métal alcalin de ces acides, les sels d'ammonium de ces acides, de l'acrylamide et du méthacrylamide, et au moins un parmi le groupe des colloïdes de protection, émulsifiants, initiateurs de polymérisation, régulateurs de poids moléculaire, cétones aromatiques, dioxyde de titane, oxydes de fer, agents de réticulation, fongicides, agents antimousses, agents épaississants, et additifs sélectionnés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4340510 A
- GB 1505558 A
- US 3196122 A
- US 3043790 A
- US 3239479 A
- DE 4317035 A
- DE 4317036 A
- JP 3131533 A
- JP 55044273 A
- DE 2164256 A
- DE 3901073 A
- CH 446720
- DE 3827975 A
- DE 2524064 A
- EP 95695 B
- EP 368226 A
- DE 1932395 B
- US 4269749 A


### In der Beschreibung aufgeführte Nicht-Patentliteratur


- Ullmanns Encyclopädie der technischen Chemie. Verlag Chemie, 1980, vol. 19, 17, 18
- Ullmann's Encyclopedia of Industrial Chemistry. VCH Weinheim, 1992, 169
- **T.G. FOX.** Bull. Am. Phys.Soc. (Ser.II. 1956, vol. 1, 123
- Ullmanns Encyclopädie der technischen Chemie. Verlag Chemie, 1980, vol. 19, 18
- Ullmann's Encyclopedia of Industrial Chemisty. VCH Weinheim, 1992, 169
- *J. of Colloid and Interface Science,* 1990, vol. 135, 165-177
- **HOUBEN-WEYL.** Methoden der organischen Chemie. Georg-Thieme-Verlag, 1961, vol. XIV/1, 411-420
- **HOUBEN-WEYL.** Methoden der organischen Chemie. Georg-Thieme Verlag, 1961, vol. XIV/1, 192-208
- *Cellulosechemie,* 1932, vol. 13, 58-64
- **KIRK-OTHMER.** *Encyclopedia of Chemical Technology,* vol. 23, 967-968